# EUROPÄISCHE PATENTSCHRIFT

(11) **EP 1 892 512 B1**
(45) Veröffentlichungstag und Bekanntmachung des Hinweises auf die Patenterteilung: **15.06.2011**
(21) Anmeldenummer: 07114665.8
(22) Anmeldetag: 21.08.2007
(51) Int. Cl.: G01L 3/22

(54) **Elektrische Antriebs- und Belastungsmaschine für Hochleistungs-Prüfstände**
Electric drive and load machine for high power test beds
Machine électrique d'entraînement ou de charge pour bancs d'essai haute puissance

(30) Priorität: 24.08.2006 AT 6372006 U
(43) Veröffentlichungstag der Anmeldung: 27.02.2008
(73) Patentinhaber: AVL List GmbH, 8020 Graz (AT)
(72) Erfinder: List, Helmut, 8010, Graz (AT); Strohschein, Wolfram, 8111, Judendorf-Straßengel (AT); Höllrigl, Reinhard, 8045, Graz (AT)
(74) Vertreter: Weiss, Christian

(56) Entgegenhaltungen:
- WO-A1-94/06196
- DE-A1- 1 918 109

## Beschreibung

Die Erfindung betrifft eine Elektrische Antriebs- und Belastungsmaschine für Hochleistungs-Prüfstände, ausgebildet insbesonders als aktiv mit Kühlmedium gekühlte, permanentmagneterregte Synchronmaschine, mit einem an das zu prüfende Aggregat koppelbaren Rotor mit geringem Trägheitsmoment.

Elektrische Maschinen für den Antrieb bzw. das Abbremsen verschiedenster Maschinen- und Fahrzeugkomponenten auf Prüfständen sind in vielfältigsten Ausführungen bekannt und ermöglichen die Prüfung beispielsweise von Brennkraftmaschinen, Getrieben, Antriebssträngen und deren Teilen unter realitätsnahen Bedingungen, ohne dass tatsächlich der Prüfling mit den ihn in der Realität belastenden Nachbaraggregaten verbunden oder in ein tatsächliches Fahrzeug eingebaut sein musste. Damit können einzelne Komponenten, wie etwa ein Getriebe, auch vollkommen unabhängig von dem dieses in der Realität treibenden Motor und den davon in weiterer Folge angetriebenen Teile des Antriebsstranges geprüft, entwickelt und optimiert werden, was große Vorteile bietet. Die für übliche Anwendungen bekannten Elektromaschinen haben aber zumindest im Hochleistungsbereich - verglichen mit realen Brennkraftmaschinen mit gleicher Leistung bzw. gleichem Drehmoment - viel zu hohe Trägheitsmomente, was realitätsnahe Prüfmethoden behindert oder unmöglich macht - hohe Leistungen und Drehmomente der Elektromaschinen, und damit eine hohe Dynamik, zusammen mit geringsten Trägheitsmomenten sind deshalb ein Ziel, das eine für Hochleistungs-Prüfstände (wie insbesondere etwa für Formel 1-Getriebeentwicklungen oder dgl.) zu erreichende Voraussetzung ist.

Geringe Trägheitsmomente der Elektromaschinen erfordern möglichst geringe Rotordurchmesser, was bei den angestrebten hohen Leistungen (Formel 1-Brennkraftmaschinen bringen größenordnungsmäßig durchaus 700 bis 1.000 PS bei 20.000 U/min und mehr an die Getriebeeingangswelle) enorme Probleme mit der auf kleinstem Raum entstehenden und zur Ermöglichung eines Dauerbetriebes auch permanent abzuführenden Verlustwärme bringt. Die für derartige Anwendungen bereits bekannt gewordene Verwendung permanentmagneterregter Synchronmaschinen ermöglicht zwar gegenüber sonstigen geeigneten Elektromaschinen relativ sehr hohe Wirkungsgrade von typischerweise über 96 % (verglichen mit etwa 92 % für übliche Induktionsmotoren) - es bleibt aber doch bei einer angestrebten Leistung von zumindest kurzzeitig bis zu 1.000 PS die bei hohen Frequenzen auftretende große Verlustleistung, die in Form von Wärme permanent abzuführen ist, was bisher bei den angestrebten niedrigsten Trägheitsmomenten (größenordnungsmäßig etwa 0,01 kg m²) nicht zu realisieren war.

Aus der WO 94/06196 A1 ist eine elektrische Maschine mit einer einseitig geschlossenen Hohlwelle bekannt. In der Hohlwelle ist ein Rohr befestigt, durch das Kühlflüssigkeit zugeführt werden kann, wobei die Kühlflüssigkeit über den Raum zwischen Rohr und Hohlwelle zurückfließt. Durch diese Ausführung wird die in der Rotorwicklung und im Rotor auftretende Verlustwärme, die sich auf die Welle überträgt, abgeführt.

Um derartige hohe Leistungen und Drehmomente der Elektromaschine zu erreichen sind aber auch extrem hohe und konzentrierte magnetische Flussdichten im Bereich des Rotors und Stators erforderlich. Ohne entsprechende Gegenmaßnahmen kommt es dabei auch zu großen magnetischen Streuflüssen, insbesondere über die Welle, die in der Regel aus magnetisch leitendem Stahl gefertigt ist, über die Lager der Welle und über das Gehäuse der Elektromaschine. Diese magnetischen Streuflüsse sind negative Nebeneffekte, die nicht nur die Leistung und das Drehmoment der Elektromaschine reduzieren, sondern insbesondere schädlich für die Lager sind, da sich diese durch die Streuflüsse stark erhitzen und binnen kürzester Zeit verschleißen würden. Diese Effekte sind somit besonders für Elektromaschinen für Hochleistungs-Prüfstände unerwünscht. Bisher wurden in Elektromaschinen oftmals keramische Lager eingesetzt, um diesem Problem zu begegnen. Bei den angestrebten extrem hohen Leistungen, reicht aber ein keramisches Lager alleine nicht aus, um diese Probleme zu beheben.

Die DE 1 918 109 A zeigt einen Hochgeschwindigkeits-Synchrongenerator mit einer Rotorwelle mit nichtmagnetischen Wellenstummeln, auf denen die Lager angeordnet sind, um die Erwärmung der Lager durch entstehende Wirbelströme zu verhindern.

Aufgabe der vorliegenden Erfindung ist es, eine elektrische Maschine der eingangs genannten Art so zu verbessern, dass einerseits magnetische Streuflüsse über die Rotorwelle und insbesondere über die Lager weitestgehend unterbunden werden und andererseits niedrige Trägheitsmomente erzielt werden.

Diese Aufgabe wird gemäß der vorliegenden Erfindung bei einer elektrischen Maschine der eingangs genannten Art dadurch gelöst, dass der Rotor dreiteilig ausgeführt ist mit einem Mittelteil in Form eines Rückschlussrohres aus einem magnetisch leitenden Material, an dem beidseitig je eine Halbwelle aus einem magnetisch nicht-leitenden Material angeordnet ist, dass an einem Ende einer Halbwelle eine Wellenverbindung zu einer Verbindungswelle vorgesehen ist und dass die Wellenverbindung eine Innenhülse umfasst, die im Inneren der Halbwelle angeordnet ist. Dadurch, dass der Rotor dreiteilig ausgeführt ist, wobei die beiden äußeren Teile magnetisch nicht-leitend sind, können über die Rotorwelle keine magnetischen Streuflüsse fließen, wodurch dieser negative Effekt unterbunden oder zumindest reduziert wird und der magnetische Fluss gezielt dort konzentriert wird, wo er erwünscht ist, also zwischen Stator und Rotor. Um ein zu prüfendes Aggregat einfach an die Elektromaschine anbinden zu können, ist vorgesehen, dass an einem Ende einer Halbwelle eine Wellenverbindung zu einer Verbindungswelle vorgesehen ist. Die Wellenverbindung weist vorteilhaft eine Innenhülse auf, die im Inneren der Halbwelle angeordnet ist. Mit einer solchen Anordnung erreicht man vorteilhaft ein besonders niedriges Trägheitsmoment der Wellenverbindung. Für hochdynamische Anwendungen ist die elektrische Maschine auf minimalstes Trägheitsmoment zu optimieren. Deshalb sind herkömmliche Methoden der Wellenverbindung, wie z.B. eine Flanschverbindung, kontraproduktiv, da damit das niedrigere Trägheitsmoment der elektrischen Maschine durch das hohe Trägheitsmoment der Wellenverbindung zum Teil oder gänzlich wieder zunichte gemacht wird. Die hier offenbarte Wellenverbindung bringt aber praktisch kein weiteres zusätzliches Trägheitsmoment ein, was besonders vorteilhaft für die gewünschten hochdynamischen Anwendungen ist.

Eine einfache und wirksame Verbindung zwischen Halbwellen mit dem Rückschlussrohr erfolgt mittels einer Klebepressung, mit der die entstehenden Drehmomente sicher übertragen werden können.

Vorteilhaft ist die Verbindungswelle innen in die Innenhülse einsteckbar und die Verbindung zwischen Innenhülse und Halbwelle bzw. Verbindungswelle erfolgt sehr einfach und sicher über eine Formschlussverbindung. Zwischen Innenhülse und Halbwelle kann auch eine Kombination aus Kraft-, z.B. über einen entsprechenden Passsitz, und Formschlussverbindung eingesetzt werden.

Wenn die Halbwelle und die Innenhülse aus Materialien mit unterschiedlichen Wärmeausdehnungskoeffizienten gefertigt sind, kann einfach erreicht werden, dass die Verbindung zwischen Innenhülse und Halbwelle unter mechanischer und thermischer Belastung im Betrieb stärker wird.

Die Erfindung wird im Folgenden noch an Hand der in den Zeichnungen schematisch dargestellten Ausführungsbeispiele näher erläutert. Fig. 1 zeigt dabei einen Längsschnitt durch eine erfindungsgemäße Elektromaschine, Fig. 2 eine 3D-Explosionszeichnung einer Wellenverbindung und Fig. 3 eine 3D-Ansicht der Wellenverbindung in montiertem Zustand.

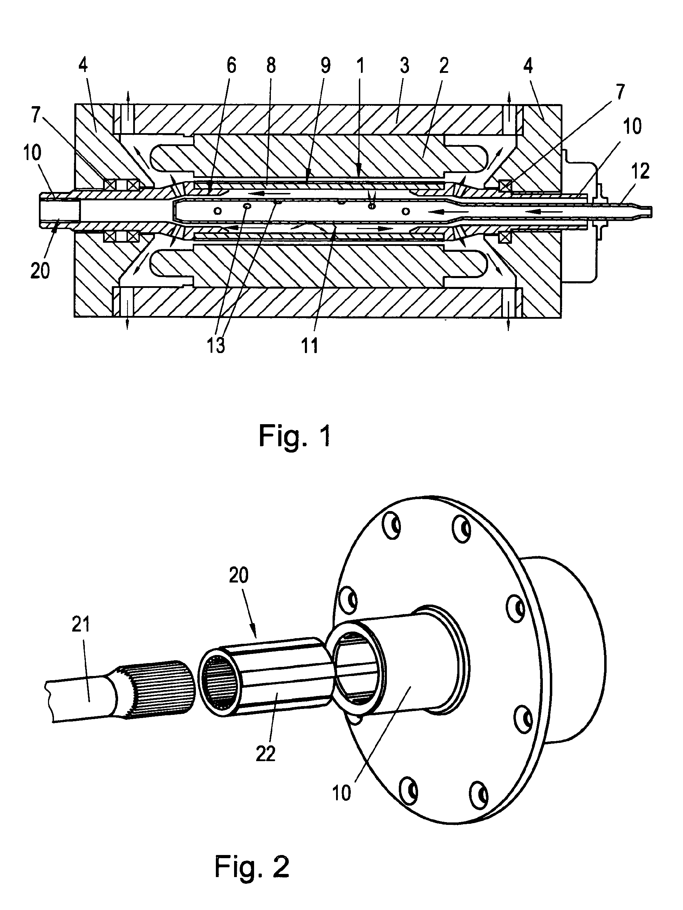

Die elektrische Antriebs- bzw. Belastungsmaschine gemäß Fig. 1 ist als permanentmagneterregte Synchronmaschine ausgebildet, was höchste Leistungsdichten und einen hohen Wirkungsgrad ermöglicht. Die Elektromaschine umfasst ein Gehäuse 3, in dem ein Stator 2 angeordnet ist. Stirnseitig wird das Gehäuse 3 durch Lagerschilde 4 abgeschlossen, in denen in bekannter Weise Lager 7 angeordnet sind, mittels der der Rotor 1 drehbar gelagert angeordnet ist.

Der Rotor 1 ist dabei dreiteilig und bevorzugt als Hohlwelle 6 ausgeführt. Der Mittelteil wird von einem magnetischen Rückschlussrohr 8 gebildet, das aus einem magnetisch hochwertigem Material gefertigt ist. Auf dem Rückschlussrohr 8 sind die permanentmagnetischen Pole 9 angeordnet. Das Rückschlussrohr 8 könnte auch als bekannter Nabenstern ausgeführt sein, was aber natürlich zu einem höheren Trägheitsmoment führen würde, weshalb ein Rückschlussrohr 8 mit geringem Durchmesser bevorzugt wird. Das Rückschlussrohr 8 ist dabei konzentrisch innerhalb des Stators 2 angeordnet. Die beiden äußeren Teile der Hohlwelle 6 werden durch Halbwellen 10 gebildet, die aus einem magnetisch nicht-leitenden Material, wie z.B. aus Titan, gefertigt sind. Die beiden Halbwellen 10 und das Rückschlussrohr 8 können z.B. durch eine Klebepressung oder Schrumpfklebung fest miteinander verbunden werden. Dazu sind die Halbwellen 10 z.B. mit einem Absatz ausgeführt, auf dem das Rückschlussrohr 8 aufgeschoben bzw. aufgeschrumpft wird. Die Rotation und die Fliehkräfte "schwächen" diese Verbindung, ebenso der unterschiedliche Ausdehnungskoeffizient der beiden unterschiedlichen Materialien. Um dem entgegenzuwirken ist hier eine Schrumpfpassung vorgesehen, die im erlaubten Temperatur- und Belastungsbereich die entsprechenden Sicherheiten aufweist. Die Verbindung wird zusätzlich durch temperaturbeständige Spezialkleber verstärkt. Selbstverständlich ist auch jede andere geeignete Verbindung zwischen Rückschlussrohr 8 und Halbwellen 10 denkbar und möglich. Eine solche Ausgestaltung des Rotors 1 als Hohlwelle 6 ergibt einerseits ein geringes Trägheitsmoment, wodurch die Elektromaschine mit hoher Leistung und hochdynamisch steuerbar beispielsweise für Hochleistungs-Prüfstände zur Prüfung von Getrieben, Antriebssträngen oder dgl. eingesetzt werden kann. Andererseits werden magnetische Streuflüsse durch die beiden Halbwellen 10 aus magnetisch nicht-leitenden Material reduziert oder sogar gänzlich vermieden.

Um parasitäre elektrische Ströme über die Hohlwelle 6 zu eliminieren könnten darüber hinaus keramische Lager 7 verwendet werden, wodurch ein Stromkreis über die Lager 7 unterbunden wäre. Darunter fallen auch so genannte Hybrid-Lager, die Lagerflächen aus Stahl aufweisen, deren Lagerkörper (z.B. Kugeln) allerdings aus Keramik gefertigt sind.

Um die entstehende Verlustwärme der Elektromaschine abführen zu können, ist, abgesehen von hier nicht dargestellten üblichen Flüssigkeitskühlungen beispielsweise des Stators 2 und des Gehäuses 3 bzw. der Lagerschilde 4 zur Kühlung des Rotors 1 selbst, eine rohrförmige, nicht mitdrehende Lanze 11 in den Rotor 1 eingeschoben, deren äußeres Ende 12 einen Anschluss für die Zufuhr von gasförmigem Kühlmedium aufweist. Im Inneren des Rotors 1 sind an der Lanze 11 Austrittsöffnungen 13 vorgesehen, die auf deren Außenumfang spiralartig über die Länge verteilt angeordnet sind, und das über den Anschluss 8 zuströmende Kühlmedium gezielt mit hoher Strömungsgeschwindigkeit gegen die Innenwandung des Rotors 1 ausblasen. Damit wird der dort bei den hohen Drehzahlen des Rotors 1 von 20.000 U/min und mehr zu Folge der Fliehkraft anhaftende, weitgehend laminare Kühlmediumfilm aufgerissen und eine effektive Kühlung der Innenwand des Rotors 1 erzielt. Das aus der Lanze 11 ausgetretene Kühlmedium strömt mit hoher Geschwindigkeit durch den Ringspalt zwischen Lanze 11 und Rotor 1 beidseits in Richtung zu den äußeren Enden des Rotors 1 und tritt bevorzugt an beidseits im Bereich der Wickelköpfe des Stators 2 ausmündenden Ventilationsöffnungen in den Gehäuseinnenraum aus und gelangt von dort über am Gehäuse 3 verteilte Austrittsöffnungen für das gasförmige Kühlmedium in die Atmosphäre, wie in Fig. 1 durch die Pfeile angedeutet ist. Gegebenenfalls können auch die Lager 7 durch das gasförmige Kühlmedium mitgekühlt werden, wenn eine entsprechende Kühlmediumführung vorgesehen wird.

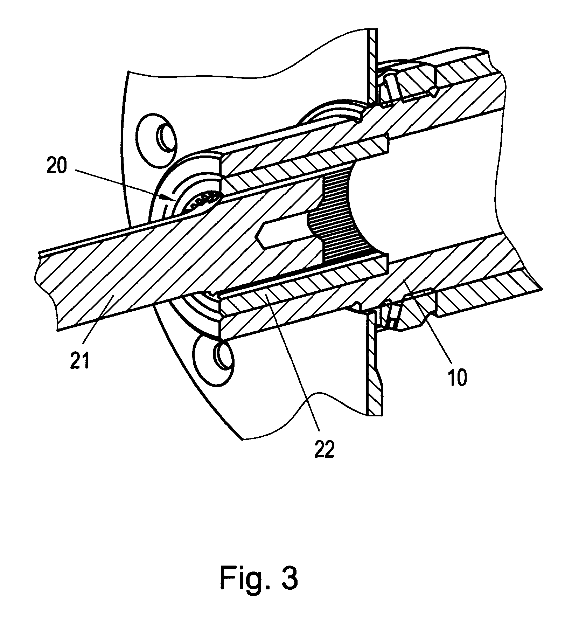

An einem Ende der Hohlwelle 6 bzw. an einem Ende einer Halbwelle 10 ist eine Wellenverbindung 20 vorgesehen, mit der die Hohlwelle 6 mit einer Verbindungswelle 21, die die Elektromaschine mit einem zu prüfenden Aggregat verbindet, verbunden werden kann, wie mit Bezugnahme auf die Figuren 2 und 3 im nachfolgenden beschrieben. Gegebenfalls kann die Verbindungswelle 21 auch die Welle des zu prüfenden Aggregats selbst sein.

Die Wellenverbindung 20 besteht aus einer Innenhülse 22, vorzugsweise eine Stahlhülse, die innen in der Halbwelle 10 angeordnet wird. Die Innenhülse 22 kann auch als beschichtete Stahlhülse ausgeführt sein, wodurch über die Art und Anordnung der Beschichtung gesteuert werden kann, welcher Teil schneller verschleißt. Dazu ist die Verbindung zwischen Innenhülse 22 und Halbwelle 10 als Formschlussverbindung ausgeführt, wie z.B. als bekannte Vielnutprofilverbindung. Auch die Verbindung zwischen Innenhülse 22 und Verbindungswelle 21 des zu prüfenden Aggregats ist als Formschlussverbindung bzw. als Kombination aus Kraft- und Formschlussverbindung ausgeführt, wie z.B. als bekannte Kerbzahnverbindung, die auch selbstzentrierend ausgeführt sein kann. Eine solche Wellenverbindung 20 weist ein sehr geringes Trägheitsmoment auf, was für einen hochdynamischen Einsatz der Elektromaschine besonders vorteilhaft ist. Bei einer Kombination von Innenhülse 22 und Halbwelle 10 mit unterschiedlichen Materialien, wie z.B. eine Halbwelle 10 aus Titan und eine Innenhülse 22 aus Stahl, ergibt sich durch die unterschiedlichen Wärmeausdehnungskoeffizienten darüber hinaus noch der Vorteil, dass die Verbindung zwischen Innenhülse 22 und Halbwelle 10 in Betrieb und unter Belastung noch stärker wird, da sich Stahl stärker ausdehnt als Titan.

## Patentansprüche

1. Elektrische Antriebs- und Belastungsmaschine für Hochleistungs-Prüfstände, ausgebildet insbesonders als aktiv mit Kühlmedium gekühlte, permanentmagneterregte Synchronmaschine, mit einem an das zu prüfende Aggregat koppelbaren Rotor (1) mit geringem Trägheitsmoment, **dadurch gekennzeichnet, dass** der Rotor (1) dreiteilig ausgeführt ist mit einem Mittelteil in Form eines Rückschlussrohres (8) aus einem magnetisch leitenden Material, an dem beidseitig je eine Halbwelle (10) aus einem magnetisch nicht-leitenden Material angeordnet ist, dass an einem Ende einer Halbwelle (10) eine Wellenverbindung (20) zu einer Verbindungswelle (21) vorgesehen ist und dass die Wellenverbindung (20) eine Innenhülse (22) umfasst, die im Inneren der Halbwelle (10) angeordnet ist.

2. Maschine nach Anspruch 1, **dadurch gekennzeichnet, dass** die Halbwellen (10) aus Titan gefertigt sind.

3. Maschine nach Anspruch 1 oder 2, **dadurch gekennzeichnet, dass** die Halbwellen (10) mit dem Rückschlussrohr (8) mittels einer Klebepressung oder Schrumpfklebung verbunden sind.

4. Maschine nach Anspruch 1, **dadurch gekennzeichnet, dass** die Verbindungswelle (21) innen in die Innenhülse (22) einsteckbar ist.

5. Maschine nach Anspruch 4, **dadurch gekennzeichnet, dass** die Innenhülse (22) sowohl an der Außenfläche, als auch an der Innenfläche eine Formschlussverbindung oder eine Kombination aus Kraft- und Formschlussverbindung aufweist, die mit einer Formschlussverbindung an der Innenseite der Halbwelle (10) bzw. einer Formschlussverbindung an der Verbindungswelle (21) zusammenwirkt.

6. Maschine nach einem der Ansprüche 1 bis 5, **dadurch gekennzeichnet, dass** die Halbwelle (10) und die Innenhülse (22) aus Materialien mit unterschiedlichen Wärmeausdehnungskoeffizienten gefertigt sind.

7. Maschine nach einem der Ansprüche 1 bis 6, **dadurch gekennzeichnet, dass** der Rotor (1) in Lagern (7) drehbar gelagert angeordnet ist und die Lager (7) als keramische Lager ausgeführt sind.

## Claims

1. An electric drive and load machine for high performance test stands, configured in particular as permanent magnet-excited synchronous machine actively cooled with cooling medium, having a rotor (1) which has a low moment of inertia and can be coupled to the aggregate to be tested, **characterized in that** the rotor is designed in three parts comprising a center part in the form of a return tube (8) made of a magnetically conductive material, wherein at each of the two sides of which, one half-shaft (10) made of a non-conductive material is arranged, that at one end of a half-shaft (10), a shaft connection (20) to a connection shaft (21) is provided and that the shaft connection (20) comprises an inner sleeve (22) which is arranged inside the half-shaft (10).

2. The machine according to claim 1, **characterized in that** the half-shafts (10) are made of titanium.

3. The machine according to claim 1 or claim 2, **characterized in that** the half-shafts (10) are connected to the return tube (8) by means of adhesive pressing or shrink-bonding.

4. The machine according to claim 1, **characterized in that** the connection shaft (21) can be inserted inside the inner sleeve (22).

5. The machine according to claim 4, **characterized in that** on the outer surface as well as on the inner surface, the inner sleeve (22) has a form-fitting connection or a force-fitting connection or a combination of force- and form-fitting connections which interacts with a form-fitting connection on the inner side of the half-shaft (10) or a form-fitting connection on the connection shaft (21).

6. The machine according to any one of the claims 1 to 5, **characterized in that** the half-shaft (10) and the inner sleeve (22) are made of materials with different coefficients of thermal expansion.

7. The machine according to any one of the claims 1 to 6, **characterized in that** the rotor (1) is arranged in a rotatably mounted manner in bearings (7) and the bearings (7) are designed as ceramic bearings.

## Revendications

1. Machine électrique d'entraînement et de sollicitation destinée à des bancs d'essai à haut rendement, conçue en particulier sous forme de machine synchrone refroidie avec un réfrigérant et excitée par un aimant permanent, comprenant un rotor (1) pouvant être couplé à l'ensemble à tester et présentant un faible moment d'inertie, **caractérisée en ce que** le rotor (1) est réalisé en trois parties avec une partie centrale sous la forme d'un tuyau de reflux (8) à base d'un matériau conducteur au plan magnétique, sur lequel est disposé sur chacun des deux côtés un demi-arbre (10) à base d'un matériau non conducteur au plan magnétique, **en ce qu'**une liaison d'arbre (20) avec un arbre de liaison (21) est prévue sur une extrémité d'un demi-arbre (10) et **en ce que** la liaison d'arbre (20) comprend un manchon intérieur (22) qui est disposé à l'intérieur du demi-arbre (10).

2. Machine selon la revendication 1, **caractérisée en ce que** les demi-arbres (10) sont fabriqués à base de titane.

3. Machine selon l'une des revendications 1 ou 2, **caractérisée en ce que** les demi-arbres (10) sont reliés au tuyau de reflux (8) au moyen d'une compression adhésive ou d'un collage fretté.

4. Machine selon la revendication 1, **caractérisée en ce que** l'arbre de liaison (21) est apte à être enfiché à l'intérieur dans le manchon intérieur (22).

5. Machine selon la revendication 4, **caractérisée en ce que** le manchon intérieur (22) présente aussi bien sur la surface extérieure que sur la surface intérieure une liaison par complémentarité de forme ou une combinaison de liaison par adhérence et liaison par complémentarité de forme, qui coopère avec une liaison par complémentarité de forme sur le côté intérieur du demi-arbre (10) ou une liaison par complémentarité de forme sur l'arbre de liaison (21).

6. Machine selon l'une des revendications 1 à 5, **caractérisée en ce que** le demi-arbre (10) et le manchon intérieur (22) sont fabriqués à base de matériaux présentant des coefficients de dilatation thermique différents.

7. Machine selon l'une des revendications 1 à 6, **caractérisée en ce que** le rotor (1) est monté de façon rotative dans des paliers (7) et les paliers (7) sont conçus sous forme de paliers céramiques.
